# EUROPEAN PATENT APPLICATION

(11) **EP 1 986 138 A2**
(43) Date of publication of application: **29.10.2008**
(21) Application number: 08007872.8
(22) Date of filing: 23.04.2008
(51) Int. Cl.: G06K 19/16, G06K 19/00, B41M 3/14, B42D 15/00, C09C 1/00, G02B 6/34, G07D 7/12

(54) **A method of recording machine-readable information**

(30) Priority: 23.04.2007 US 913423 P
(71) Applicant: JDS Uniphase Corporation, Milpitas, CA 95035 (US)
(72) Inventor: Raksha, Vladimir P., Santa Rosa, California 95403 (US); Tan, Kim Leong, Santa Rosa, California 95407 (US); Phillips, Roger W., Santa Rosa, California 95405 (US)
(74) Representative: Bertsch, Florian Oliver

(57) **Abstract**

The invention relates to a method of recording machine-readable information on an article (1), including the steps of: providing a carrier (3) having flakes (2) dispersed therein onto the surface of the article (1), wherein all of the flakes (2) have a beam-splitting grating pattern encoding the information thereon; aligning the flakes (2) parallel to a sloped plane forming a slope angle with the surface of the article; and, solidifying the carrier (3). When the article (1) is irradiated (160) with an EM beam, a first portion of the EM beam is reflected from the surface of the article, forming a surface reflection, a second portion of the beam is reflected from the beam-splitting grating pattern, forming an arrangement of sub-beams, and the slope angle provides a spatial separation between the arrangement of sub-beams and the surface reflection, enabling machine-reading.

## Description

### TECHNICAL FIELD

The present invention relates to optical flakes having a grated pattern thereon. More particularly, the invention relates to methods of recording machine-readable information using the optical flakes.

### BACKGROUND OF THE INVENTION

A variety of security devices employ machine-readable diffraction gratings. U.S. Patent No. 6975765 issued December 13, 2005, to McGrew et al. discloses a security device having different grating characteristics in different surface regions. A graphical composition can be detected by a reader having an illumination subsystem and an image detecting subsystem.

U.S. Patent No. 5101184 issued March 31, 1992, in the name of Antes discloses a diffraction element having pairs of surface portions mirror-symmetric with respect to the orientation of the corresponding relief structures. A readout device generates an incident light beam and contains photosensors to output the intensity difference between pairs of diffracted light beams.
However, a document containing a single, macro-size, diffractive surface requires proper positioning, so that a laser beam does not miss the diffractive surface. A single, macro-size, diffractive element is easily noticeable and therefore is a target for counterfeiters for transferring from a valid document to a counterfeit one.
An object of the present invention is to overcome disadvantages of the prior art and provide a cost-effective method for recording machine-readable information using an ink coating containing grated flakes dispersed therein.

### SUMMARY OF THE INVENTION

Accordingly, the present invention relates to a method of recording machine-readable information on an article, including the steps of: providing a carrier having flakes dispersed therein coated onto the surface of the article, wherein the flakes have a same beam-splitting diffractive grating pattern encoding the information thereon; aligning the flakes parallel to a sloped plane forming a slope angle with the surface of the article; and, solidifying the carrier. When the article is irradiated with electro-magnetic (EM) radiation in the form of an EM beam, a first portion of the EM beam is reflected from the surface of the article, forming a surface reflection, a second portion of the beam is reflected from the beam-splitting grating pattern, forming an arrangement of sub-beams, and the slope angle provides a spatial separation between the arrangement of sub-beams and the surface reflection, enabling machine-reading.

Another aspect of the present invention relates to a method of obtaining information from an article, including the steps of: providing the article having the information recorded using a beam-splitting grating pattern as defined above, wherein the article includes flakes having the beam-splitting grating pattern thereon, and wherein the flakes are aligned parallel to a sloped plane forming a same slope angle with the surface of the article; irradiating the article with a beam of EM radiation, whereby a first portion of the beam is reflected from the surface of the article, forming a surface reflection, a second portion of the beam is reflected from the beam-splitting grating pattern, forming an arrangement of sub-beams, wherein the slope angle provides a spatial separation between the arrangement of sub-beams and the surface reflection; and, obtaining the information from the arrangement of sub-beams.

Another feature of the present invention provides a printed article with a covert feature. The article has magnetic flakes with a microstructure of a beam-splitting grating dispersed in the layer of an ink vehicle, or carrier, and aligned using a magnetic field to form an array of structured flakes for the purpose of a splitting an incident beam of coherent light into a pattern defined by the beam-splitting structure.

### BRIEF DESCRIPTION OF THE DRAWINGS

The invention will be described in greater detail with reference to the accompanying drawings which represent preferred embodiments thereof, wherein:
Figure 1 is a flow-chart depicting block diagram of a method of recording machine-readable information;
Figure 2A is a grating profile of a first-order beam-splitting Dammann grating, according to prior art;
Figure 2B is a schematic isometric view of a polyester platelet coated with magnetic and reflective layers and having the beam-splitting grating pattern embossed on its surface;
Figure 3 is an isometric view of an article printed with grated, aligned flakes and irradiated with a beam of EM radiation;
Figure 4 is block diagram of a method of obtaining information from an article;
Figure 5 is perspective view of an article printed with grated, not tilted flakes and irradiated with a beam of EM radiation;
Figures 6A and 6B are schematic diagrams of exemplary beam-splitting grating patterns;
Figures 6C is a plot of intensity of light reflected from the grating shown in Fig. 6B;
Figure 7 is a perspective view of a flake having the beam-splitting grating pattern shown in Fig. 6;
Figure 8 is a top view of a beam spot on the surface of an article;
Figure 9 is an elevation view of an article with two ink coatings having differently aligned grated flakes;
Figure 10 is a diagram of an exemplary beam-splitting grating pattern; and,
Figure 11 is a perspective view of an article manufactured using a two-step printing method.

### DETAILED DESCRIPTION

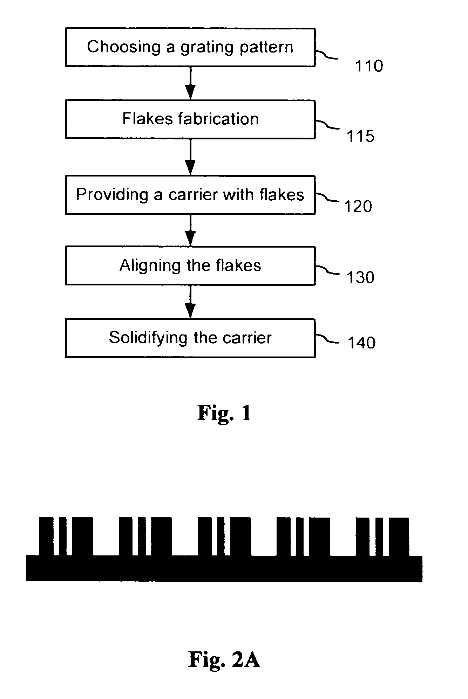

With reference to Fig. 1, method steps of recording machine-readable information on an article include a grating pattern step 110 of selecting a wavelength or wavelength range for reading the information, and selecting or designing a beam-splitting grating diffractive pattern, also referred to as a diffractive pattern generator, for diffracting, or splitting, a beam of electro-magnetic (EM) radiation into a plurality of sub-beams, thus encoding the information readable from an image produced by the sub-beams on a screen or in a reading/decoding device. Preferably, the grating pattern is designed for a predefined wavelength or wavelength range.

Specially designed beam-splitting gratings, also referred to as supergratings or Dammann gratings, produce sub-beams of equal or close energy values, which is beneficial for machine-reading applications. Preferably, the beam-splitting grating pattern on a flake provides at least 3 or more sub-beams differing in energy no more that 5 times when illuminated with a monochrome EM beam having a predetermined wavelength, which for visible light means providing at least 3 spots with brightness (luminance) values differing no more than 5 times. Methods of designing supergratings are disclosed, for example, in Diffractive Optics, O'Shea et all., SPIE Press, 2004, pp. 84-92 and 122-124, and U.S. Patent No. 6,415,081 issued July 2, 2002, in the name of Levner et al., both incorporated herein by reference. The supergratings are periodic gratings where every period has a highly complex structure. By way of example, Fig. 2A shows a grating profile of a first-order beam-splitting Dammann grating made by superposition of two regular gratings having different grating frequencies, designed for splitting an incident light beam into five sub-beams of equal intensity and several other sub-beams of lesser intensity. The supergratings are capable of generating a variety of patterns suitable for recognition and decoding, such as an array of spots, a grid, etc.

Alternatively, the beam-splitting grating pattern is a cross-grating diffractive pattern providing a two-dimensional pattern of light spots. By way of example, a cross-grating diffractive pattern is made of two regular, sinusoidal, mutually-orthogonal gratings having equal periods. Of course, the two gratings can be irregular and non-sinusoidal, such as rectangular, triangle, etc. or have different periods.

An optional flake fabrication step 115 includes manufacturing of flakes having the predetermined beam splitting grating thereon. Alternatively, the flakes may be chosen from a pre-existing stock. By way of example, the flakes include several thin film layers deposited in vacuum onto a polyester substrate and defoliated from the substrate and ground to desirable size, such as discloses in U.S. Patents Nos. 6,838,166 issued January 4, 2005, in the name of Phillips et al., 6,818,299 issued November 16, 2004, in the name of Phillips et al., 6,808,806 issued October 26, 2004, in the name of Phillips et al., 6,841,238 issued January 11, 2005, in the name of Argoitia et al, 6,902,807 issued June 7, 2005, in the name of Argoitia et al, and 7,241,489 issued July 10, 2007, to Argoitia et al., incorporated herein by reference.

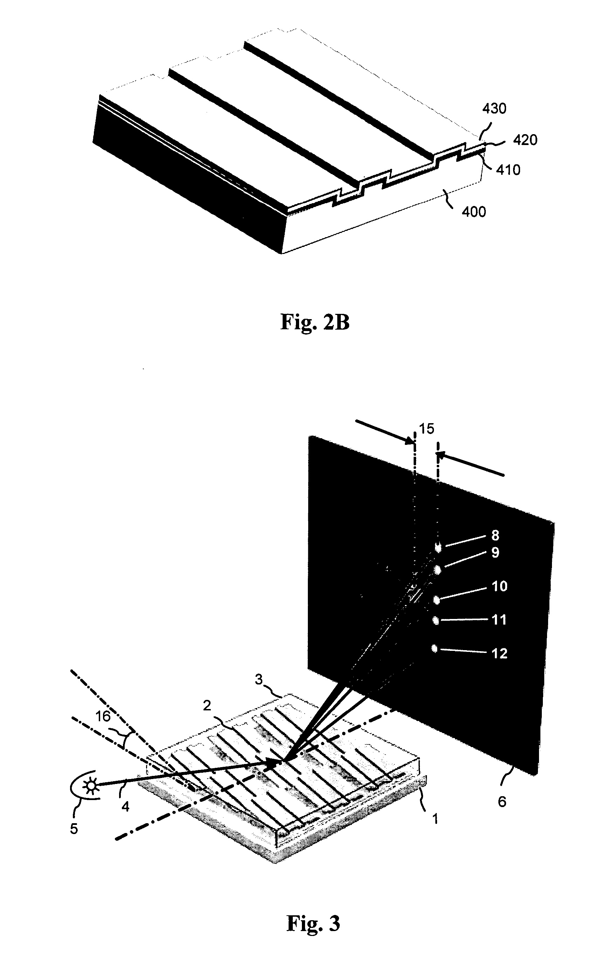

Alternatively, the flakes are manufactured as taught in U.S. Application No. 20060228553 published October 12, 2006 by Argoitia et al., incorporated herein by reference, that is one or more thin film layers are deposited onto a substrate embossed with the beam-splitting diffractive grating, and the coated substrate is cut to a predetermined size and shape. With reference to Fig. 2B, such flakes are fabricated by depositing a magnetic material 410 onto a thin polyester substrate 400 embossed with the beam-splitting diffractive grating, and then either a metallic reflector or a color-shifting optical stack 420. A layer of a hydrophobic or oleophobic material 430 is deposited as the last layer. The polyester substrate 400 with vacuum deposited layers 410 - 430 is cut into flakes having a size of 50 microns to 750 microns.

Further steps of the method illustrated by Fig. 1 will be described now with reference to Fig. 3. In a coating step 120, a carrier 3 having flakes 2 dispersed therein is provided onto the surface of the article 1. Preferably, the carrier 3 and the flakes 2 form an ink, which is printed onto the article 1. The flakes 2 have the beam-splitting grating pattern thereon.

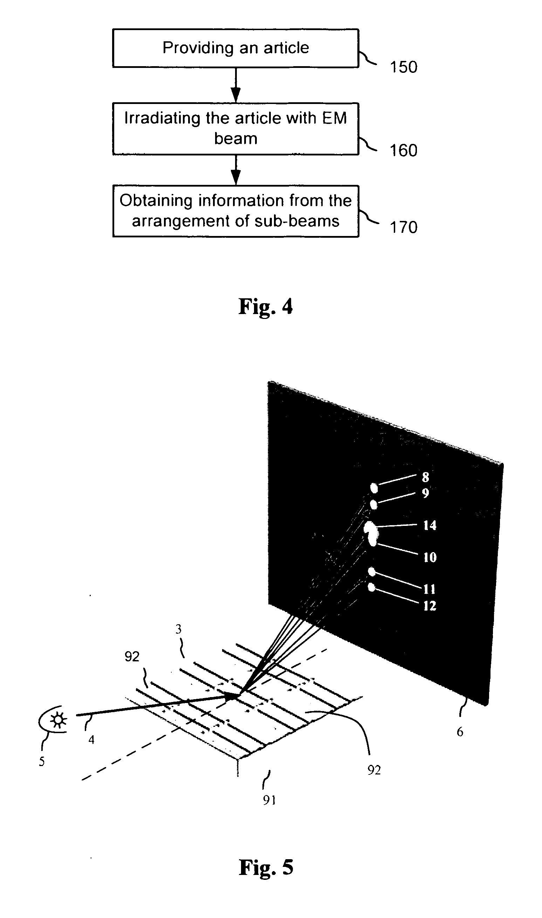

In an alignment step 130, the flakes 2 are aligned parallel to each other and to an imaginable sloped plane forming a slope angle 16 with the surface of the article 1. Preferably, the flakes include a magnetically responsive material and are aligned using a magnetic field having magnetic field lines oriented at the slope angle 16 to the surface of the article 1. Alternatively, the flakes are oriented using an electrostatic field. The alignment of the flakes will be discussed in more detail further with reference to an irradiation step 160 shown in Fig. 4.

In a coating solidifying step 140, the carrier 3 with the flakes 2 is solidified, for example by curing using any known conventional method, for example, UV or e-beam irradiation, solvent evaporation, etc.

The steps 110 - 140 provide the article 1 with the information encoded on the flakes in the beam-splitting grating pattern.

With reference to Fig. 4, a method of obtaining the information from the article 1 shown in Fig. 3 includes the following steps: an article step 150, the irradiation step 160, and an information step 170.

In the article step 150, the article 1 having the information recorded using a beam-splitting grating pattern as described above, is provided. It includes the flakes 2 having the beam-splitting grating pattern thereon; all of the flakes 2 are aligned parallel to the sloped plane forming the slope angle 16 with the surface of the article 1.

In the irradiation step 160, the article 1 is irradiated with a beam of electro-magnetic (EM) radiation from a radiation source 5 shown in Fig. 3. Preferably, the radiation provided by the radiation source 5 is within the range of electromagnetic spectrum detectable by an optical decoding device. The radiation source 5 can be a monochromatic source or a polychromatic source, it can provide visible light or invisible radiation. By way of example, the radiation source 5 is a 650-nm laser. Preferably, the wavelength or wavelength range of the beam provided by the radiation source 5 is the same as one chosen in the grating pattern step 110 shown in Fig. 1.

With reference to Fig. 3, the beam 4 from the radiation source 5 impinges on the printed article 1 and is reflected to a screen 6. Alternatively, the screen 6 can replaced with a detector of a reading/decoding device. The process of "reflection" is understood here as including both specular reflection and diffraction. A portion of the beam is reflected from the beam-splitting grating pattern on the flakes 2, forming an arrangement of sub-beams and an array of spots 8-12 on the screen 6. Another portion of the beam is reflected from the surface of the article 1; either by the surface of the carrier 3, or by a protective or other optional layer coated on top of the carrier 3.

The surface reflection may present the problem illustrated by Fig. 5, wherein the flakes 92 having the same grating pattern as flakes 2 shown in Fig. 3, are aligned parallel to the surface of the article 91. A portion of the beam 4 is reflected from the surface of the article 91 forming a surface reflection sub-beam 13 and a surface reflection spot 14 on the screen 6. The surface reflection spot 14 distorts the image formed by the arrangement of sub-beams and may cause errors in reading the information.

According to the instant invention, the flakes 2 are aligned parallel to the sloped plane forming the slope angle 16 with the surface of the article 1, as shown in Fig. 3. The aligning step is such, that when_the article 1 is irradiated with the EM beam 4, the slope angle 16 provides a spatial separation between the arrangement of sub-beams and the surface reflection sub-beam 13, which appears on the screen 6 as a separation 15 between the surface reflection spot 14 and the array of spots 8-12 provided by the arrangement of sub-beams, thus enabling machine-reading of the reflected image. Preferably, the slope angle 16 is greater than 5 degrees and less than 45 degrees to provide enough separation from the surface reflected spot 14 to the array of spots 8 - 12 in order to avoid superposition of images.

Preferably, the flakes are aligned so that grating vectors of all the flakes, that is vectors lying in the plane of the flakes and orthogonal to the grating grooves, are parallel to each other and form the slope angle with the surface of the article. As a result, the grating grooves of all the flakes are aligned at the slope angle to the surface of the article, and grooves of one flake are parallel to grooves of another flake. Such alignment of the grooves provides that the same position of the article 1 in respect to the radiation source 5 and the screen 6 is the best both for maximizing the separation 15 between the surface reflection spot 14 and the array of spots 8 - 12, and for maximizing the power of diffracted sub-beams.

In one embodiment, the direction of the grooves is not the same as the direction of the flakes slope in respect to the surface. For example, such coating can be made using a magnetic field to align the flakes horizontally with all the grooves in the same direction, solidifying the coating, and then adding another uneven coating having a wedge profile.

In the information step 170 shown in Fig. 4, the information is obtained from the arrangement of sub-beams. The pattern of the sub-beams and light spots on the screen is predetermined by the beam-splitting grating design. With reference to Fig. 3, the spots 8-12 produced on the screen 6 by the arrangement of sub-beams relate the information by the presence or absence of the array of the spots 8 - 12, the mutual layout and brightness of the spots, etc. Of course, more complicated images formed as discussed below contain more information than an array of light spots. The information may be obtained by a human observer, or by optical sensors thus enabling machine reading of the information. Optionally, the obtained information is compared with information stored in the reader to verify the authenticity of the obtained information and the article.

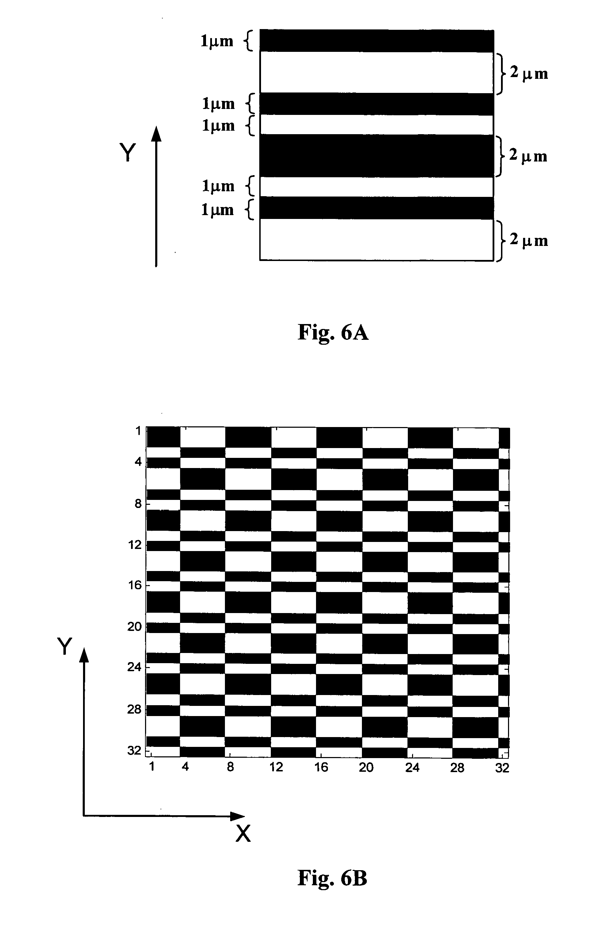

By way of example, two beam-splitting grating patterns are shown in Figs. 6A and 6B, where white regions correspond to debossed areas of the grating, and black regions - to embossed areas, also referred to as grooves. The grating of Fig. 6A has a one-dimensional Dammann grating pattern, and the grating shown in Fig. 6B - a two dimensional Dammann grating pattern. In X-direction, 4 pixels have a state 0, or "debossed", followed by four pixels having a state 1, or "embossed". This pattern repeats in X direction, that is row wise in respect to Fig. 6B, so that adjacent regions of alternate rows have opposite states..In Y-direction, 1 pixel has a state 0, the next pixel has a state 1, two next pixels have a state 0, followed by a pixel having a state 1, a pixel having a state 0, and 2 pixels having a state 1. This pattern repeats in Y direction, wherein two adjacent columns are offset by two pixels as shown in Fig. 6B.

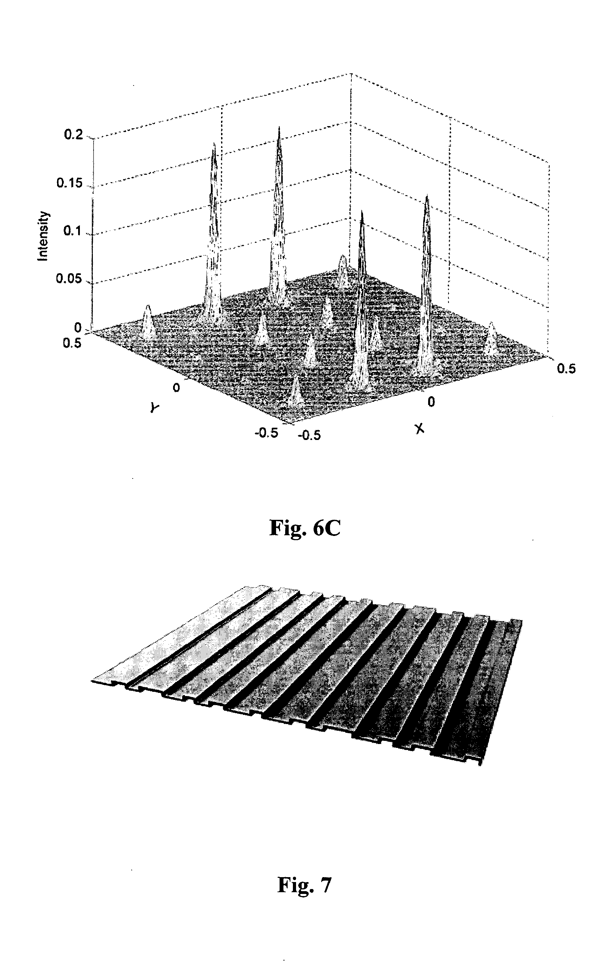

The gratings shown in Figs. 6A and 6B are designed for splitting a laser beam into an arrangement of sub-beams of approximately equal intensity, providing a pattern of bright spots on a screen. In particular, the grating shown in Fig. 6B provides a square pattern of spots. The depth of embossing is chosen of about 325nm to provide the maximum efficiency for the predefined wavelength of the laser beam having a wavelength of 633 - 650nm. In respect to Fig. 6C, the Damman grating pattern has black and white pixels providing 0 and π relative phase values. This phase profile is embossed in aluminum coated polyester in a manner that the round trip optical path length difference between the black and white pixels is π at the required angle of incidence and center wavelength of illumination. When a monochromatic laser beam is used to read a diffraction image, both ±1 diffraction orders appear symmetrically deviated from the specular reflection direction in two orthogonal axes. The Y-direction spatial frequency encoding is three times that of the X-direction spatial frequency encoding. Consequently, the ±1 orders diffracted along the Y-direction appears three times as dispersed as the X-direction diffracted spots. The X- and Y-direction first order steering angle is approximately 1/8 and 3/8 of ratio of wavelength and encoding pixel size. The diffraction efficiency for each of the four first order spots is approximately 20% as illustrated by Fig. 6C, if there are no other undesirable defects such as non π phase step and non equal width of black and white pixels.

By way of example, a single flake having a beam-splitting grating pattern is shown in Fig. 7. The flake is made of at least one layer of a magnetic material about 100nm thick. Preferably, the flake has a multi-layered structure such as disclosed in the aforementioned U.S. Patents Nos. 6,838,166, 6,818,299, 6,808,806, 7,241,489 and the U.S. Patent Application No. 20060228553.

The magnetically responsive material facilitating alignment of the flakes in the alignment step 130 shown in Fig. 1, is a soft or hard magnetic metal or alloy, such as iron, cobalt, nickel; alloys such as Ni-Co or Nd-Fe-B; SmCo alloys, inorganic oxide compounds such as Fe₂O₃, Fe₃O₄, chromium dioxide CrO₂, ferrites MFe₂O₄ (with M an ion or a cocktail of ions selected from the group consisting of Mg²⁺, Ca²⁺, Sr²⁺, Ba²⁺, Mn²⁺, Co²⁺, Fe²⁺, Ni²⁺, Cu²⁺, Zn²⁺, etc.), garnets A₃B₅O₁₂ (with A = a trivalent rare earth-ion or a cocktail of trivalent rare-earth ions and B an ion or a cocktail of ions selected from the group consisting of Al³⁺, Cr³⁺, Fe³⁺, Ga³⁺, Bi³⁺, etc.), hexaferrites MFe₁₂O₁₉ with M selected from the group of divalent ions Ca²⁺, Sr²⁺, Ba²⁺, etc., perovskites, etc.

Optionally, one side of the flake shown in Fig. 7 is coated with a hydrophobic or oleophobic material, or another carrier- repellent material depending on the material of the ink carrier, for facilitating alignment of the flakes this side up, as disclosed in a co-pending U.S. Patent Application Ser. No. 12/051,164 filed March 19, 2008 and co-authored by a co-inventor of the instant invention. The carrier-repellent material is a hydrophobic material for flakes used in a water-based carrier, or an oleophobic material for flakes in an oil-based carrier or in another organic carrier. Generally, the choice of the carrier-repellent material depends on the type of the carrier, so that a carrier-repellent surface is not-wettable by the carrier, that is a contact angle between the surface and the liquid carrier is greater than 90°. By way of example, the hydrophobic material is scandium fluoride or WR1 Patinal® manufactured by Merck.

The grated diffractive flakes, such as one shown in Fig. 7, have an average size in the range of 5x5microns to 500x500microns, and an average thickness is in the range of 0.05 to 10 microns. By way of example, a diameter of a laser beam is about 2 mm, therefore multiple flakes are irradiated simultaneously by the same laser beam. Each grated flake having a beam-splitting grating thereon provides a beam-splitting effect for a portion of the beam impinging on the surface of this flake. The reflected light spots on a screen or detector, such as shown in Fig. 3, is a cumulative result of reflecting different portions of the beam from different flakes.

In one embodiment, all grated flakes within a beam-spot-size region on an article have the same grating pattern, for example such as one shown in Fig. 7, for providing a strong, well-readable image, visible or invisible, on a detector. Of course, other types of flakes can be present in the carrier, for example thin-film color-shifting flakes.

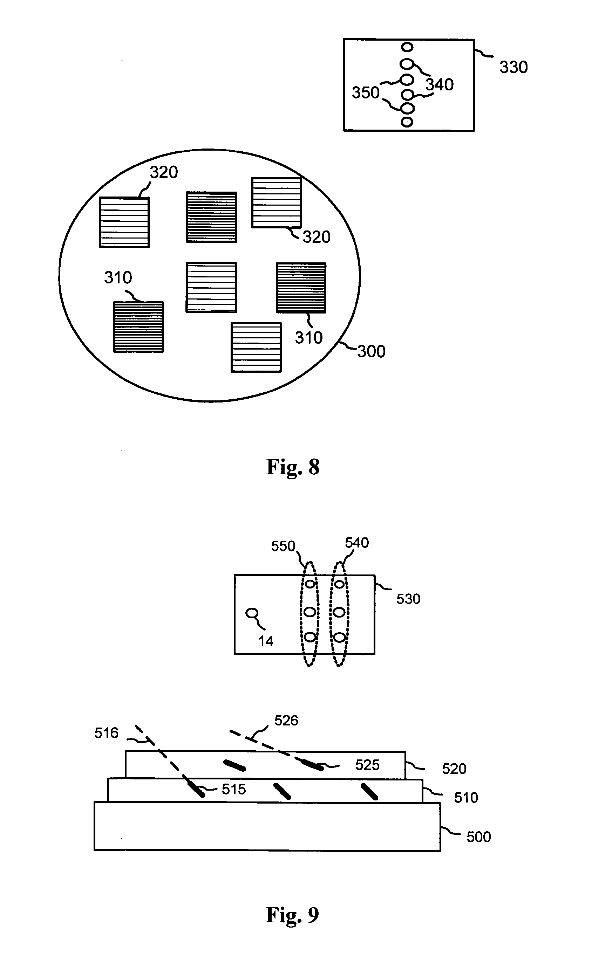

An alternative embodiment of the instant invention will be described now with reference to Fig. 1. Two or more different beam-splitting patterns are chosen in the grating pattern step 110, and two or more types of grated flakes, having the chosen beam-splitting patterns thereon, are provided to the surface of an article within a carrier in the coating step 120. In the flake alignment step 130, all the flakes aligned at the same slope angle. Accordingly, when the article is irradiated with a beam of light, or invisible EM radiation, the beam is split into an arrangement of sub-beams which is combination of sub-beam arrangements provided by each of the chosen grating patterns. With reference to Fig. 8, the laser beam impinging on the article in a region 300, is reflected by first flakes 310 and second flakes 320 having different beam-splitting grating patterns thereon. The first flakes 310 provide a first array of light spots 340 on a screen 330, and the second flakes 320 provide a second array of light spots 350.

An alternative embodiment of the instant invention will be described now with reference to Fig. 9 displaying a cross-section of an article. A substrate 500 is coated with a first ink layer 510 containing first flakes 515 having a beam-splitting grating pattern thereon. After the first flakes 515 have been aligned in a first direction 516 forming a first slope angle with the surface of the article, the carrier of the first ink layer 510 is solidified. Then, a second ink layer 520 contains second flakes 525 is printed on the first ink layer 510. The second flakes 525 have a beam-splitting grating pattern thereon, the same or different from the beam-splitting grating pattern of the first flakes 515. The second flakes 515 are aligned in a second direction 526, forming a second slope angle with the surface of the article, different from the first slope angle of the first direction 516. After that, the carrier of the second ink layer is also solidified. If a two-layered structure made as described above is irradiated with a beam of light, a screen 530 has two arrays of light spots 540 and 550. The two arrays are spatially separated from each other due to the difference between the first and second slope angles, and each of them is spatially separated from the surface reflection spot 14.

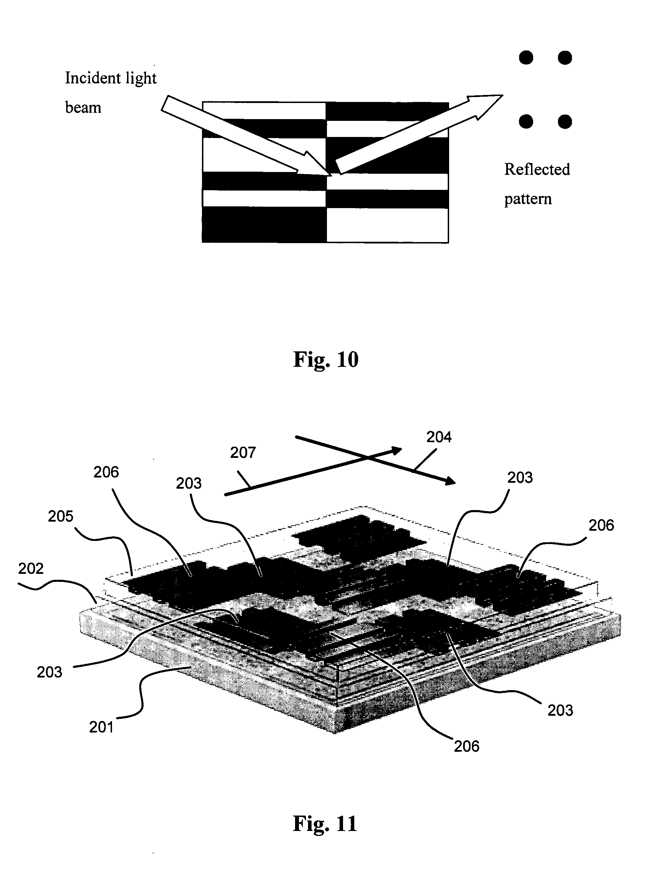

A variety of images can be obtained by specifically designed gratings. By way of example, a beam-splitting grating pattern forming a rectangular pattern of four light spots is shown schematically in Fig 10. It has the same parameters of the grating as the pattern shown in Fig. 6.

Alternatively, elaborated images can be produced by light reflected from printed articles formed using diluted inks in the two-step printing method. Within a first printed layer, flakes are aligned in one direction for forming a first line of dots on a screen. A second layer, printed over the first layer, contains flakes aligned normally to the flakes within the first layer to form a second line of dots perpendicular to the first line. The two-layered structure is shown schematically in Fig. 11. A substrate 201 is coated with a first ink layer 202 of a carrier containing first magnetic flakes 203 having a beam-splitting grating pattern, magnetically oriented in a first direction 204. A second ink layer 205 of the same ink is printed over the first ink layer 202, it contains second flakes 206, similar to the first flakes 203, but magnetically oriented in a second direction 207, normal to the first direction 204. When irradiated with a laser beam, the article provides an arrangement of dots in the pattern of a grid. Optionally, the beam-splitting grating pattern of the first flakes 203 is different from the beam-splitting grating pattern of the second flakes 206.

The aforedescribed article can be used for forming an image on a screen by reflecting a beam of EM radiation towards the screen. The information on the article can be detected by a reader having an illumination subsystem to direct a beam of EM radiation on the article, and an image detecting subsystem receiving and processing the radiation reflected from the article. By way of example, the illumination subsystem includes a commercially available laser, and the image detecting subsystem includes an array of charge-coupled devices (CCD array).

## Claims

1. A method of recording machine-readable information on an article, comprising the steps of:
providing a carrier having a plurality of flakes dispersed therein coated onto the surface of the article, wherein the plurality of flakes have a same beam-splitting grating pattern encoding the information thereon;
aligning each of the plurality of flakes parallel to a sloped plane forming a slope angle with the surface of the article; and,
solidifying the carrier;
whereby the aligning step is such, that when the article is irradiated with an EM beam,
a first portion of the EM beam is reflected from the surface of the article, forming a surface reflection,
a second portion of the beam is reflected from the beam-splitting grating pattern, forming an arrangement of sub-beams, and
the slope angle provides a spatial separation between the arrangement of sub-beams and the surface reflection, enabling machine-reading.

2. A method as defined in claim 1, wherein the beam-splitting grating pattern is a supergrating pattern.

3. A method as defined in claim 1 or 2, wherein the beam-splitting grating pattern is a cross-grating diffractive pattern.

4. A method as defined in any of claims 1 to 3, wherein the flakes comprise a magnetically responsive material, and step (b) includes using a magnetic field for aligning the plurality of flakes.

5. A method as defined in any of claims 1 to 4, wherein the plurality of flakes is formed by cutting an embossed substrate having the magnetically responsive material thereon.

6. A method as defined in any of claims 1 to 5, wherein each of the plurality of flakes comprises a carrier-repellent material on the beam-splitting grating pattern.

7. A method as defined in any of claims 1 to 6, wherein step (a) includes printing the carrier and the plurality of flakes dispersed therein onto the surface of the article.

8. A method as defined in any of claims 1 to 7, wherein in step (b) the plurality of flakes is aligned so that the grooves of all of the plurality of flakes are aligned at the slope angle to the surface of the article.

9. A method as defined in any of claims 1 to 8, wherein of the slope angle is greater than 5 degrees and less than 45 degrees.

10. A method of obtaining information from an article, comprising the steps of:
providing the article having the information recorded as defined in claim 1 using a beam-splitting grating pattern,
wherein the article comprises flakes having the beam-splitting grating pattern thereon,
and wherein all of the flakes are aligned parallel to a sloped plane forming a slope angle with the surface of the article;
irradiating the article with a beam of EM radiation, whereby
a first portion of the beam is reflected from the surface of the article, forming a surface reflection,
a second portion of the beam is reflected from the beam-splitting grating pattern, forming an arrangement of sub-beams,
wherein the slope angle provides a spatial separation between the arrangement of sub-beams and the surface reflection; and,
obtaining the information from the arrangement of sub-beams.

11. A method as defined in claim 10, wherein the EM radiation is monochromatic radiation.

12. A method as defined in claim 11, wherein the beam of EM radiation is provided by a laser.

13. A method as defined in any of claims 10 to 12, wherein the step of obtaining the information is automated.

14. A method as defined in any of claims 10 to 13, wherein an image produced by the arrangement of sub-beams on a screen or detector comprises three or more spots.

15. A method as defined in any of claims 10 to 14, further comprising a step of comparing the information with stored information to verify its authenticity.
